# EUROPÄISCHE PATENTSCHRIFT

(11) **EP 0 384 977 B1**
(45) Veröffentlichungstag und Bekanntmachung des Hinweises auf die Patenterteilung: **19.04.1995**
(21) Anmeldenummer: 89123635.8
(22) Anmeldetag: 21.12.1989
(51) Int. Cl.: G01N 29/00

(54) **Vorrichtung zur Messung von Ultraschallaufzeiten**
Apparatus for measuring propagation time of ultrasounds
Appareil pour mesurer le temps de propagation des ultrasons

(30) Priorität: 25.02.1989 DE 3905956
(43) Veröffentlichungstag der Anmeldung: 05.09.1990
(73) Patentinhaber: FRAUNHOFER-GESELLSCHAFT ZUR FÖRDERUNG DER ANGEWANDTEN FORSCHUNG E.V., 80636 München (DE)
(72) Erfinder: Herzer, Rüdiger, D-6600 Saarbrücken 2 (DE); Schneider, Eckhardt, D-6601 Riegelsberg (DE)
(74) Vertreter: Rackette, Karl, Dipl.-Phys. Dr.-Ing

(56) Entgegenhaltungen:
- EP-A- 0 295 893
- DE-A- 2 835 170
- US-A- 3 690 154
- ULTRASONICS Band 26, Nr. 5,September1988, Seiten 256-259, Guildford, Surrey, GB; H. NAKANO et al.:"Microcomputer-assisted system for measurement of ultrasonic velocity"
- REVIEW OF SCIENTIFIC INSTRUMENTS Band 51, Nr. 3, März 1980,Seiten 355,356; G.A. REIDER et al.: "Device for improving ultrasonic transit time measurements with standard pulse echo equipment"

## Beschreibung

Die Erfindung betrifft eine Vorrichtung zur Messung von Ultraschallaufzeiten in Werkstücken mit einem HF-Pulsgenerator, der Hochfrequenzwellenzüge mit wenigen Schwingungsperioden erzeugt und der mit einem Ultraschallsender verbunden ist, der sich in Koppelkontakt für Ultraschall mit dem zu untersuchenden Werkstück befindet, mit einem Ultraschallempfänger, der sich ebenfalls in Koppelkontakt für Ultraschall mit dem zu untersuchenden Werkstück befindet und dessen Ausgangssignal einen Nulldurchgangskomparator und eine Torschaltung beaufschlagt, die einen Synchronisationseingang aufweist, der mit dem HF-Pulsgenerator verbunden ist, wobei die Torschaltung über den ersten Eingang eines UND-Gliedes mit dem Start/Stop-Eingang eines Zählers verbunden, der zweite Eingang des UND-Gliedes mit dem Ausgangssignal des Nulldurchgangskomparators beaufschlagt und das Zeittor der Torschaltung eine Breite kleiner als die Ultraschallwellenlänge hat und auf vorbestimmte Nulldurchgänge positionierbar ist.

Zur Charakterisierung von Werkstoffgefügen und -Zuständen werden Ultraschall-Verfahren verwendet, bei denen die elastische Wechselwirkung zwischen der das Werkstück durchlaufenden Ultraschallwelle und dem Material ausgenutzt wird. Die Meßgröße ist hierbei die Laufzeit der Ultraschallwelle. Durch sehr genaues Erfassen dieser Laufzeiten können bei genauer Kenntnis der räumlichen Gestaltung des Werkstückes mechanische Spannungszustände in Bauteilen, Texturen in Walzprodukten oder auch die Porosität von Keramiken bestimmt werden.

Eine solche Vorrichtung mit den einleitend genannten und den Oberbegriff des Anspruchs 1 bildenden Merkmalen ist aus der US-Z Ultrasonics; Vol.26, Heft 5, S.256 - 259 (1988) bekannt, bei der die empfangenen Ultraschallechos mit einem Nulldurchgangskomparator in eine Pulsfolge zerlegt wird. In den Zeitraum des Eingangs des ersten bzw. des zweiten oder eines weiteren Ultraschallechos wird jeweils ein Zeittor mit einstellbarer Torbreite positioniert. Aus der Vielzahl der Nulldurchgangsimpulse des ersten Ultraschallechos wird so ein Nulldurchgang selektiert und ein Zähler gestartet Aus der Vielzahl der Nulldurchgangsimpulse des zweiten oder eines weiteren Ultraschallechos wird ein anderer Nulldurchgang selektiert und der Zähler gestoppt. Diese vorbekannte Vorrichtung zur Messung von Ultraschallaufzeiten weist den Nachteil auf, daß für eine gegebene Meßanordnung die Tore manuell eingestellt werden müssen.

Bei sich in stärkerem Maße ändernden Ultraschallaufzeiten verläßt der selektierte Nulldurchgangsimpuls das voreingestellte Tor und die Vorrichtung unterbricht die Meßwerterfassung.

Wenn das zu untersuchende Material oder der verwendete Prüfkopf gewechselt wird, müssen die Parameter der Tore manuell neu bestimmt und eingespeichert werden. Dieser zeitintensive Vorgang muß ebenfalls bei einer Änderung der Probendicke des zu untersuchenden Materials durchgeführt werden.

Die US-Z Rev.Sci.Instrum.; Vol. 51, S. 355-356 (1980), lehrt eine ähnliche Vorrichtung zur Erfassung von Ultraschallaufzeiten mit einem Nulldurchgangsdetektor, wobei die Torschaltung manuell vom Bediener mit Hilfe eines Oszilloskops zu positionieren ist.

Aus der US-PS 36 90 154, ist eine Vorrichtung zur Dickenbestimmung von Werkstoffen bekannt, die mit Hilfe einer Tunneldiode den ersten Nulldurchgang eines Ultraschallechos selektiert und zum Starten und Stoppen eines Zählers verwendet. Eine solche Vorrichtung weist den Nachteil einer geringen Meßgenauigkeit auf, da das Signal-/Rausch-Verhältnis beim ersten Nulldurchgang des Echosignals verhältnismäßig schlecht ist.

Die US-PS 44 52 085 beschreibt eine Zähleinrichtung für einen Ultraschallscanner. Ein Nullspannungsdetektor zählt die eingehenden Echopulse in einem vorgegebenen Zeitabschnitt, über deren Zahl die spektrale Schwächung des reflektierten Ultraschalls in dem beschallten Medium gefunden wird.

Eine weitere Vorrichtung zur Erfassung von Ultraschallaufzeiten ist von Moro, Farina und Rossi in der Zeitschrift NDT-International, S. 169, Aug. 1980 beschrieben. Eine Ultraschallwelle aus wenigen Wellenzügen wird durch eine Anregung eines piezokeramischen Wandlers mit Hilfe eines HF-Senders erzeugt. Die in das Werkstück einlaufende Ultraschallwelle erzeugt durch Reflexion an den Werkstückrückseiten ein erstes Echo und in Folge ein zweites und weitere Echos, die von dem Ultraschallempfänger aufgenommen und in dem nachgeschalteten Verstärker verstärkt werden.

In den Torschaltungen der bekannten Vorrichtungen werden mit Hilfe von Synchronisationsimpulsen des HF-Senders Zeittore erzeugt, mit denen die nacheinander einlaufenden Ultraschallechos koinzident sind und Start- und Stopimpulse für den angeschlossenen Hochfrequenzzähler erzeugen. Dabei wird die Überschreitung eines Schwellwertes der verstärkten Ultraschallsignale zum Starten bzw. Stoppen des Zeitzählers verwendet.

Bei dieser Meßmethode führen Amplitudenschwankungen, die durch Veränderung der Ankopplung des Ultraschallsenders bzw. Ultraschallempfängers an das zu untersuchende Werkstück, durch Gefügeänderungen oder durch Schallbündeldivergenzen auftreten können, zu erheblichen Fehlern bei der Zeitmessung. Bei dem Stand der Technik sind durch die hier auftretenden Fehler auf Nanosekunden genaue absolute Laufzeitmessungen zwischen zwei Ultraschallechos in einer industriellen Umgebung nicht möglich.

Der Erfindung liegt die Aufgabe zugrunde, eine Vorrichtung der eingangs genannten Art zu schaffen, die es gestattet, auf Nanosekunden genaue Laufzeitmessungen von Ultraschallechos bei beliebigen Prüfköpfen, Materialien und Probendicken in rascher Folge durchzuführen.

Diese Aufgabe wird erfindungsgemäß dadurch gelöst, daß ein Hüllkurvendemodulator zwischen dem Ausgang des Ultraschallempfängers und der Torschaltung vorgesehen ist, dessen Ausgangssignal einen Maximumsdetektor und einen Schwellwertkomparator beaufschlagt, dessen Ausgang mit der Torschaltung verbunden ist, daß der Schwellwertkomparator ein Ausgangssignal bei einem vorbestimmten kleinen Schwellwert einem ersten Zeitpunkt zu Beginn der Hüllkurve und der Maximumsdetektor ein Ausgangssignal beim Erreichen des Maximums des Hüllkurvensignals zu einem zweiten Zeitpunkt erzeugt, wobei der erste Zeitpunkt den frühesten Startzeitpunkt des Zeittores und der zweite Zeitpunkt einen Orientierungspunkt in Gestalt des spätesten Startzeitpunktes des Zeittores festlegt, die Breite des Zeittores kleiner oder ungefähr gleich die Hälfte der Ultraschallwellenlänge beträgt, und daß mit einer Verzögerungssteuerschaltung die Verzögerung des Zeittores der Torschaltung für einen zeitlichen Abstand von M Viertel-Wellenlängen des Ultraschalls zu dem Maximum einstellbar ist, wobei M eine ungerade natürliche Zahl ist.

Durch die Verwendung eines Hüllkurvendemodulators, dessen Ausgangssignal einen Schwellwertkomparator und einen Maximumsdetektor beaufschlagt, sind zwei charakteristische Zeitpunkte in einem Ultraschallecho bestimmbar, nämlich zum einen ein ungefährer Anfangszeitpunkt des Ultraschallechos und zum anderen das Maximum der Hüllkurve des reflektierten Ultraschallechos. Der erste Zeitpunkt gibt den frühesten Startzeitpunkt und der zweite Zeitpunkt den spätesten Startzeitpunkt für das von einer Verzögerungssteuerschaltung zu positionierende Zeittor. Die Verzögerungssteuerschaltung stellt die Verzögerung des Zeittores der Torschaltung zeitlich z.B. um ein Viertel der Wellenlänge des Ultraschalls vor dem Maximum ein, so daß der letzte Nulldurchgang des Ultraschallechos vor dem Maximum des Wellenzuges des Ultraschalls sicher selektiert wird, der die höchste Steilheit und damit das beste Signal-/Rauschverhältnis des Ultraschallwellenzuges aufweist. Das Zeittor befindet sich damit in einem vorbestimmten Abstand von dem frühesten Zeitpunkt und damit in gleicher zeitlicher Lage in jedem Ultraschallecho, so daß die Zeittore bei neuen Messungen mit anderen Proben oder wechselnden Probendicken automatisch mit dem zeitlich sich verändernden Ultraschallecho mitverschoben werden.

Die Auswahl des richtigen Nulldurchgangs wird vom Ultraschallecho selbst abgeleitet. Dadurch werden z.B. im Vergleich mit der Auswahl des Nulldurchgangs über einen Synchronisationsimpuls des HF-Senders Fehler durch Ultraschallaufzeitänderungen von Vielfachen der halben Sendewellenlänge vermieden.

Zweckmäßige Ausgestaltungen der Erfindung sind Gegenstand der Unteransprüche.

Nachfolgend wird ein Ausführungsbeispiel der Erfindung anhand der Zeichnung näher erläutert. Es zeigen:
- Fig. 1: ein zu untersuchendes Werkstück mit einem aufgesetzten Ultraschallsender und Ultraschallempfänger,
- Fig. 2: den Signalverlauf eines elektrischen Signals eines Ultraschallimpulses mit Ultraschallechos am Ausgang des Ultraschallempfängers,
- Fig. 3: ein Blockschaltbild einer Vorrichtung zur Messung von Ultraschallaufzeiten in Werkstücken und
- Fig. 4: Signalverläufe von verschiedenen Ausgangssignalen der Vorrichtung zur Messung von Ultraschallaufzeiten in Werkstücken.

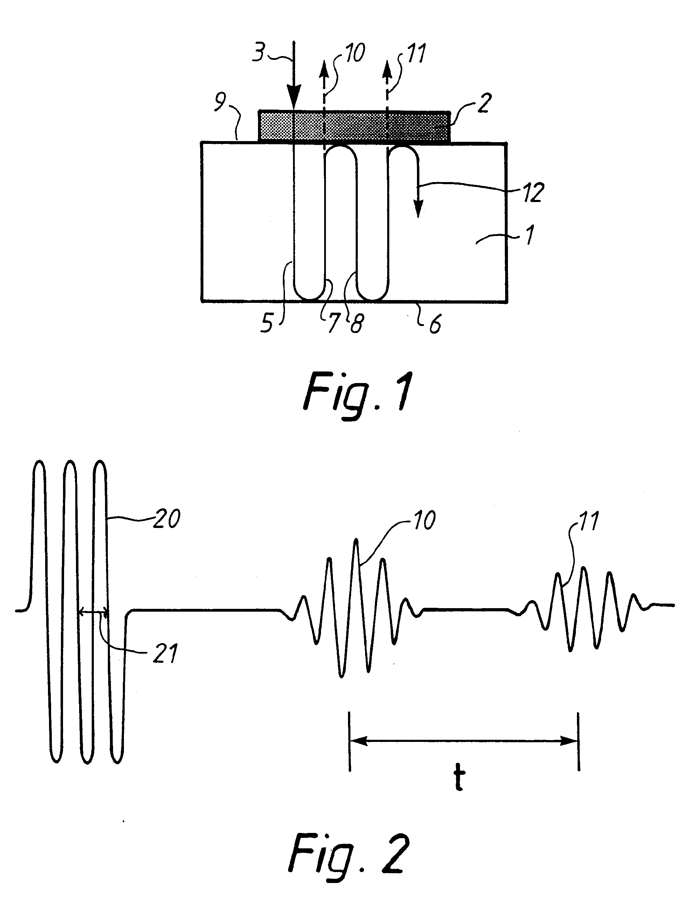

Die Figur 1 zeigt schematisch ein zu untersuchendes Werkstück 1 mit einem auf dieses aufgesetzten Ultraschallsender und Ultraschallempfänger 2. Der Koppelkontakt zwischen Ultraschallsender/Ultraschallempfänger 2 und dem Werkstück 1 kann z.B. auch über eine Ankoppelstrecke aus Wasser oder Öl bewirkt werden. Der Eingangspfeil 3 verdeutlicht die dem kombinierten Ultraschallsender und Ultraschallempfänger 2 zugeführte Leistung eines in der Zeichnung nicht dargestellten HF-Senders. Der HF-Sender sendet in periodischen zeitlichen Abständen aus wenigen Wellenzügen bestehende Hochfrequenzsignale aus. Diese aus wenigen Schwingungsperioden bestehenden Signale werden in dem Ultraschallsender und Ultraschallempfänger 2 in Ultraschallimpulse umgewandelt, die in das zu untersuchende Werkstück 1 eindringen. Eine durchgezogene Linie zeigt schematisiert den Verlauf der das Werkstück 1 durchdringenden ersten Ultraschallwelle 5. Die Welle wird an der dem Ultraschallsender und Ultraschallempfänger 2 gegenüberliegenden Probenrückfläche 6 reflektiert und läuft als reflektierte Ultraschallwelle 7 zur Probenoberfläche 9 zurück. Infolge von Wechselwirkungen mit dem Probenmaterial des Werkstückes 1 wird die Welle in ihrer Amplitude mit dem Laufweg zunehmend geschwächt.

Die reflektierte Welle 7 läuft zum Ultraschallsender und Ultraschallempfänger 2 zurück und wird zum Teil als zweite Ultraschallwelle 8 an der zum Ultraschallsender hinweisenden Probenoberfläche 9 reflektiert. Der restliche Teil tritt durch die zum Ultraschallsender hinweisende Probenoberfläche 9 aus dem Werkstück 1 aus. Dieser Anteil ist als erstes Ultraschallecho 10 mit einer gestrichelten Linie schematisch dargestellt. Das erste Ultraschallecho 10 wird in dem Ultraschallsender und Ultraschallempfänger 2 in ein von der Elektronik der Vorrichtung zur Messung von Ultraschallaufzeiten in Werkstücken weiterzuverarbeitendes elektrisches Signal umgewandelt.

Die zweite Ultraschallwelle 8 wird wie die erste Ultraschallwelle 5 an der gegenüberliegenden Probenrückfläche 6 des zu untersuchenden Werkstückes 1 reflektiert und dieser Wellenanteil erzeugt in dem Ultraschallsender und Ultraschallempfänger 2 ein zweites Ultraschallecho 11. Die durch Reflexion an der zum Ultraschall sender hinweisenden Probenoberfläche 9 des Werkstückes 1 entstehende dritte Ultraschallwelle 12 erzeugt durch weitere Reflektionen an den Probenrückflächen 6 und den Probenoberflächen 9 dritte und weitere Ultraschallechos, deren Signalamplitude immer kleiner wird.

Anstelle des kombinierten Ultraschallsenders und Ultraschallempfängers 2 kann ein Ultraschallsender an der zum Ultraschallsender hinweisenden Probenoberfläche 9 und ein an der gegenüberliegenden Probenrückfläche 6 befestigter Ultraschallempfänger vorgesehen sein. Dann bilden die nichtreflektierten Anteile der ersten bzw. zweiten Ultraschallwelle 5 bzw. 8 das erste bzw. zweite Ultraschallsignal des Ultraschallechos 10 bzw. 11.

Die Figur 2 zeigt den zeitlichen Signalverlauf des elektrischen Signals eines Ultraschallimpulses 20 und des ersten Ultraschallechos 10 und des zweiten Ultraschallechos 11 am Ausgang des Ultraschallempfängers 2. Der Ultraschallimpuls 20 besteht aus drei hochfrequenten Schwingungsperioden 21 mit einer konstanten, großen Signalamplitude. Nach einer Zeit, die der Laufzeit entspricht, die die erste Ultraschallwelle 5 und die an der gegenüberliegenden Probenrückfläche 6 reflektierte Welle 7 benötigen, um den räumlichen Abstand zwischen der zum Ultraschallsender hinweisenden Probenoberfläche 9 und der gegenüberliegenden Probenrückfläche 6 zu überwinden, tritt am Ausgang des Ultraschallsenders und Ultraschallempfängers 2 das erste Ultraschallecho 10 und nach der doppelten Laufzeit das zweite Ultraschallecho 11 auf. Die Echos 10 und 11 weisen eine erheblich kleinere Amplitude und eine glockenförmige Hüllkurve auf, deren Maximum ungefähr mit der zeitlichen Mitte des Echosignals 10 oder 11 übereinstimmt.

Bei einem getrenntem Aufbau von Ultraschallsender und Ultraschallempfänger ist z.B. der Ultraschallempfänger auf der dem Ultraschallsender 2 gegenüberliegenden Probenrückfläche 6 angeordnet. Bei einer solchen Anordnung halbiert sich die Zeit zwischen dem Ultraschallimpuls 20 und dem ersten Ultraschallecho 10. Die zeitliche Differenz zwischen dem ersten Ultraschallecho 10, dem zweiten Ultraschallecho 11 und allen weiteren Echos bleibt bestehen.

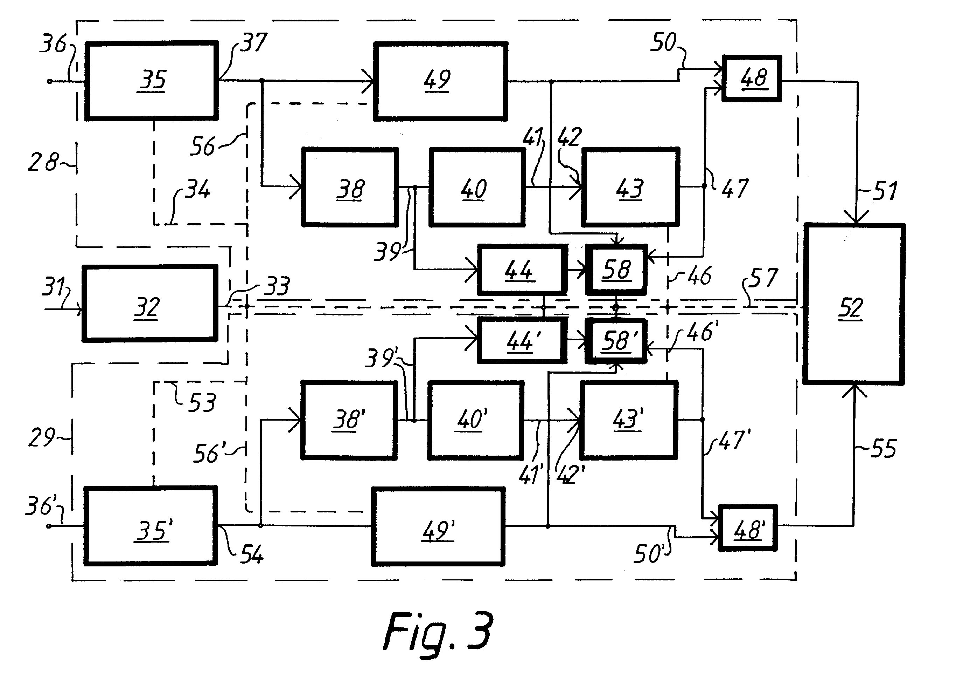

Die Figur 3 zeigt ein Blockschaltbild einer Vorrichtung zur Messung von Ultraschallaufzeiten in Werkstücken. Die Schaltung unterteilt sich in zwei gleichaufgebaute Teilschaltungen, eine Startimpulsschaltung 28 und eine Stopimpulsschaltung 29, von der zuerst die Startimpulsschaltung 28 beschrieben wird.

Ein Synchronisationssignalausgang des in der Figur 3 nicht dargestellten HF-Senders ist über eine Synchronisationsleitung 31 mit einer elektronischen Rechnereinheit 32 verbunden. Die Rechnereinheit 32 verfügt über einen Signalbus 33, über den eine Vielzahl der in der Folge beschriebenen Elemente der Vorrichtung gesteuert wird.

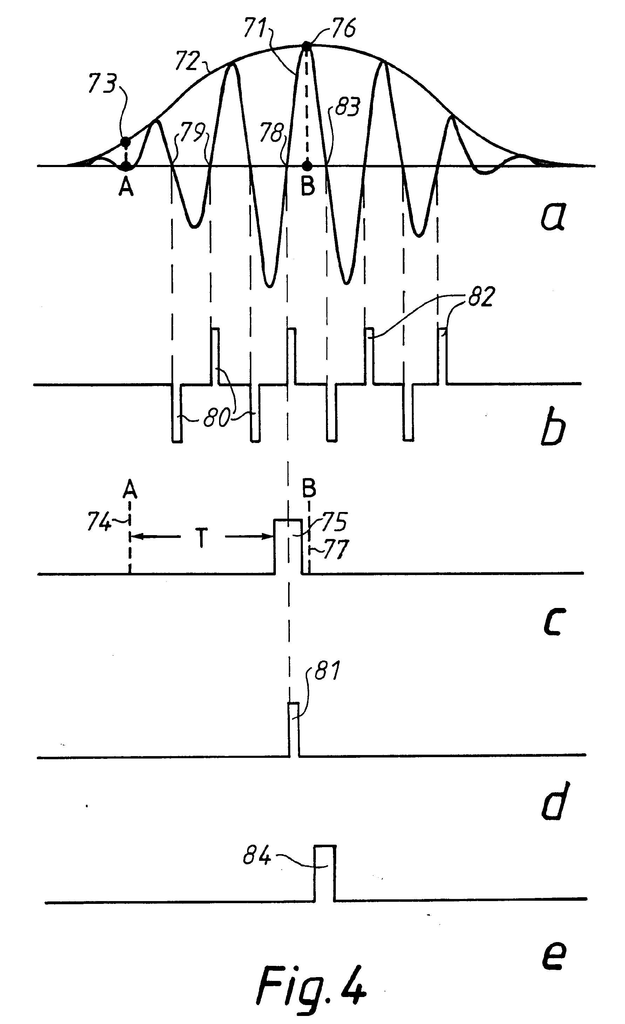

Die ersten Signalbusleitungen 34 sind an einen Vorverstärker 35 angeschlossen, der mit dem in der Figur 3 nicht dargestellten Ultraschallsender und Ultraschallempfänger 2 über eine Signalleitung 36 verbunden ist. Der Vorverstärker 35 enthält einen Torschaltkreis, der mit Hilfe der ersten Signalbusleitungen 34 von der Rechnereinheit 32 gesteuert wird. Der Torschaltkreis ist zu dem Zeitpunkt geöffnet, zu dem das erste Ultraschallecho 10 an dem Vorverstärker 35 anliegt. Die Rechnereinheit 32 berechnet die Öffnungsdauer des Zeittores, die größer als die Dauer des Ultraschallimpulses 20 ist, aufgrund der Ausmaße des zu untersuchenden Werkstückes 1 und des auf der Synchronisationsleitung 31 einlaufenden Synchronisationsimpulses, so daß am Ausgang 37 des Vorverstärkers 35 nur das in der Figur 4a dargestellte verstärkte erste Ultraschallecho 71 anliegt. Die Rechnereinheit 32 berechnet unter Kenntnis der Schwingungsperiode 21 des Hochfrequenzsignales 20 und der zu erwartenden Zahl der Schwingungsperioden im empfangenen ersten Ultraschallecho 10 die Öffnungsdauer des Zeittores. Aufgrund der Ausmaße des zu untersuchenden Werkstückes 1 und unter Bezugnahme auf den auf der Synchronisationsleitung 31 einlaufenden Synchronisationsimpuls kann das Zeittor von der Rechnereinheit 32 so positioniert werden, daß am Ausgang 37 des Vorverstärkers 35 nur das in der Figur 4a dargestellte verstärkte erste Ultraschallecho 71 anliegt. Damit wird sowohl der Ultraschallimpuls 20 als auch das zweite oder weitere Ultraschallechos 11 unterdrückt.

Zur Verdeutlichung der Funktionsweise der Schaltung wird in der Folge wiederholt Bezug auf die Figur 4 genommen, deren Bezugszeichen mit 71 beginnen. Das verstärkte erste Ultraschallecho 71 beaufschlagt einen Hüllkurvendemodulator 38, in dem ein Hüllkurvensignal 72 des verstärkten ersten Ultraschallechos 71 gebildet wird. Dieses liegt über eine Hüllkurvenleitung 39 an einem Komparator 40 an. Der Komparator 40 ist auf einen Schwellwert 73 eingestellt, der in der Figur 4a zu dem Zeitpunkt A erreicht ist. Der Schwellwert 73 ist so gewählt, daß seine Amplitude nur wenig über dem Rauschen liegt, so daß sich auch bei großen Änderungen in der Signalamplitude des Maximums 76 der Hüllkurve 72 der an dem flachen Flankenfuß liegende Schwellwert 73 kaum verändert.

Die mit dem Ausgang des Komparators 40 verbundene Schwellwertleitung 41 ist an einen Steuereingang 42 einer Torschaltung 43 angeschlossen. Der über diese Leitung übermittelte Zeitpunkt A bildet den in der Figur 4c dargestellten frühesten Startzeitpunkt 74 für ein Zeittor 75 der Torschaltung 43.

Über die Hüllkurvenleitung 39 liegt das Hüllkurvensignal 72 ebenfalls an einem Maximumsdetektor 44 an. Sein in der Fig. 4e dargestelltes Ausgangssignal 84 gibt den Zeitpunkt an, zu dem das verstärkte erste Ultraschallechos 71 sein Maximum 76 besitzt. Dieses Ausgangssignal 84 wird in einer nachfolgenden Flip-Flop-Schaltung 58 auf zeitliche Koinzidenz mit dem Ausgang der Torschaltung 43 überprüft. Das Ergebnis der Überprüfungen wird über den Signalbus 33 an der elektronischen Rechnereinheit 32 zugeleitet.

Der Ausgang der Torschaltung 43 ist weiterhin über eine erste Koinzidenzleitung 47 mit einem dynamischen UND-Glied 48 verbunden.

Das am Ausgang 37 des Vorverstärkers 35 anliegende verstärkte erste Ultraschallecho 71 beaufschlagt auch einen schnellen ECl-Nulldurchgangskomparator 49 ( ECL für emittergekoppelte Logik ). Dieser erzeugt bei Nulldurchgängen 79 des verstärkten ersten Ultraschallechos 71 Nadelimpulse 80, die in der Figur 4b übertrieben breit dargestellt sind. Die Nadelimpulse 80 beaufschlagen über die zweite Koinzidenzleitung 50 das dynamische UND-Glied 48.

Der Ausgang des ECL-Nullspannungkomparators 49 beaufschlagt ebenfalls die Flip-Flop-Schaltung 58 und wird auf zeitliche Koinzidenz mit dem Ausgang der Torschaltung überprüft. Das Ergebnis dieser Überprüfung wird ebenfalls der elektronischen Rechnereinheit 32 übermittelt.

Das Ausgangssignal des dynamischen UND-Gliedes 48, das in der Figur 4d dargestellt ist, ist für jedes Ultraschallecho ein einziger Rechteckimpuls 81, der sich durch die Koinzidenz von dem Zeittor 75 und dem Nadelimpuls 80 eines Nulldurchganges 79 ergibt. Die elektronische Rechnereinheit 32 separiert den gewünschten Nulldurchgang, zum Beispiel den letzten positiven Nulldurchgang 78 des verstärkten ersten Ultraschallechos 71 vor seinem Maximum 76. Dieser Nulldurchgang 78 weist die größte Steigung und somit das größte Signal/Rauschverhältnis auf.

Die Rechnereinheit 32 stellt über den Signalbus 46 die Öffnungszeit der Torschaltung 43 und damit die Breite des Tores 75 in Figur 4c unter Kenntnis der Wellenlänge 21 des Hochfrequenzsignales 20 für die gesamte Meßdauer auf ungefähr die Hälfte der Wellenlänge 21 ein.

Desweiteren wird über den Signalbus 56 der Nullspannungskomparator 49 so eingestellt, daß nur noch positive Nulldurchgänge, das heißt positive Nadelimpulse 82 das nachgeschaltete UND-Tor 48 erreichen.

Ausgehend vom Zeitpunkt A in Figur 4c erhöht die Rechnereinheit 32 die Verzögerungszeit T der Torschaltung 43 von T=0 an beginnend mit der Wiederholfrequenz des HF-Sendesignales und überprüft in der Flip-Flop-Stufe 58 kontinuierlich die zeitliche Koinzidenz von Tor 75 und dem Maximumssignal 84. Kommt das Tor über dem Maximum 76 des ersten Ultraschallechos zu liegen, wird die Inkrementbildung von T beendet. Die Rechnereinheit 32 vermindert nun die Verzögerungzeit T solange, bis eine zeitliche Koinzidenz zwischen z.B. einem positiven Nulldurchgang 82 und dem Tor 75 an die Rechnereinheit 32 zurückgemeldet wird. Diese Dekrement- oder Inkrementbildung beträgt das M-fache einer ¼-Wellenlänge 21, wobei M eine ungerade natürliche Zahl darstellt.

Somit z.B. wird die gewünschte Separation des Nulldurchganges 78 und damit die Erzeugung des Rechteckimpulses 81 erreicht.

Man kann sich bei der Ermittlung des Startimpulses bzw. des Stopimpulses auch auf den dem Maximum 76 der Hüllkurve 72 folgenden Nulldurchgang 83 mit negativer Steigung beschränken. Der Maximumsdetektor 44 erfaßt den Zeitpunkt B und das die Rechnereinheit 32 beaufschlagende Maximumssignal erzeugt in der Rechnereinheit 32 ein Schaltimpuls, der das Zeittor 75 eine Viertel-Wellenlänge des Ultraschalls nach dem Maximum 76 des Hüllkurvensignals 72 der verstärkten Ultraschallechos 71 positioniert.

Der Rechteckimpuls 81 liegt über eine Startleitung 51 an einem 500-Megahertz-Zähler 52 an und startet denselben.

Die in der Figur 3 dargestellte Stopimpulsschaltung 29 ist analog zu der schon beschriebenen Startimpulsschaltung 28 aufgebaut. Dementsprechend sind deren elektronischen Bauteile mit denselben mit einem Apostroph versehenen Bezugszeichen bezeichnet. Die elektronische Rechnereinheit 32 steuert über die zweiten Signalbusleitungen 53 das Zeittor des zweiten Vorverstärkers 35′, so daß am Ausgang 54 des zweiten Vorverstärkers 35′ nur das verstärkte zweite Ultraschallecho anliegt. Sowohl der Ultraschallimpuls 20 als auch das erste, dritte oder weitere Ultraschallechos werden unterdrückt. Das im Vergleich mit dem ersten Ultraschallecho 10 etwas schwächere zweite Ultraschallecho 11 wird in dem zweiten Verstärker 35′ so verstärkt, daß seine Verarbeitung in der Stopimpulsschaltung 29 analog zu der Verarbeitung des verstärkten ersten Ultraschallechos 71 in der Startimpulsschaltung 28 erfolgt. Die mit dem Zähler 52 verbundene Stopleitung 55 weist einen Rechteckstopimpuls zu dem Zeitpunkt des letzten Nulldurchgangs vor dem Maximum des verstärkten zweiten Ultraschallechos auf.

Mit dem verwendeten 500-Megahertz-Zähler 52 kann die Laufzeit des Ultraschalls bei einem einzelnen HF-Sendeimpuls des HF-Senders auf zwei Nanosekunden genau gemessen werden. Durch Mittelung über eine Vielzahl von HF-Sendeimpulsen, die im Kilohertzbereich aufeinander folgen können, wird die Genauigkeit der Messung in den Bereich von einigen Hundert Picosekunden verbessert.

Beschränkt man sich wie beschrieben auf Nulldurchgänge 79 mit positiver Steigung 82, so darf die Variation des Triggerzeitpunktes A, die durch Amplitudenschwankungen hervorgerufen wird, bis zu der Hälfte der Wellenlänge des Ultraschalls betragen. Dies ergibt für industrielle Messungen mit bewegten Ultraschallsendern und Ultraschallempfängern 2 und dadurch hervorgerufenen Ankopplungsschwankungen eine genügende Sicherheit, wenn die Breite des Zeittores 75 auf kleiner oder gleich die Hälfte der verwendeten Ultraschallwellenlänge 21 eingestellt wird. Die Breite der Nadelimpulse 80 ist kleiner als die Breite des Zeittores 75.

Gemessen wird somit die Ultraschallaufzeit t in Figur 2 zwischen einem ersten Ultraschallecho 10 und einem zweiten Ultraschallecho 11. Es können dabei auch Änderungen der Laufzeit t, welche wesentlich größer als eine Wellenlänge 21 sind, zuverlässig gemessen werden, da das Tor 75 über die Verzögerungsleitungen in einem konstanten zeitlichen Abstand von dem Zeitpunkt A gehalten wird. Bei gleichbleibender Signalform des Ultraschallechos liegen die Nadelimpulse 80 in gleichem Abstand von dem Zeitpunkt A, so daß das separierte Signal z.B. 81 seine relative Lage zu dem Zeitpunkt A nicht ändert und so sicher innerhalb des Tores 75 verbleibt. Damit ist es möglich, ohne Meßunterbrechung z.B. konisch sich vergrößernde Teile durchzumessen, da sich bei solchen geometrisch bedingten Laufzeitänderungen die Hüllkurve 72 mit dem Zeitpunkt A insgesamt verschiebt und somit das separierte Signal 81 in gleicher Lage zu dem Tor 75 bleibt. Dabei haben auch Amplitudenschwankungen der Ultraschallechos 10 und 11 keinen Einfluß auf die Messung, da der den Zeitpunkt A festlegende Schwellpunkt 73 an der flachen Flanke der Hüllkurve 72 vorherbestimmt ist. Erst bei Amplitudenänderungen in der Hüllkurve 72, die zu einer solchen Verschiebung der Phasenlage des Zeitpunktes A und dem Schwellpunkt 73 führen, daß das Tor 73 um die mehr als einer Halben Ultraschall-Wellenlänge entsprechenden Zeit verschoben wird, unterbricht die elektronische Rechnereinheit 32 die Messung. Eine solche Phasenänderung ist zumeist mit Anomalien in dem Werkstück verbunden, so daß der Meßprozeß dann mit dem Ergebnis eines ungewöhnlichen Werkstückmerkmals abgebrochen wird.

Ebenfalls besteht die Möglichkeit, Ultraschallaufzeitmessungen zwischen beliebig auswählbaren Ultraschallechos 10,11 durchzuführen oder zwischen verschiedenen Nulldurchgängen 79 des gleichen oder zwei verschiedenen Ultraschallechos.

Die elektronische Rechnereinheit 32 kann auch dazu benutzt werden, die Laufzeiten zwischen verschiedenen Nulldurchgängen 79 zu messen, die sich jeweils um eine halbe Periode der Ultraschallwellenlänge sprungartig ändern, indem das Tor 75, ausgehend von dem Orientierungszeitpunkt B in Figur 4c, über jeden Nulldurchgang vor oder nach dem Zeitpunkt B verfahren werden kann. Die gemessenen Laufzeiten werden dann rechnerisch gemittelt.

In dem beschriebenen Ausführungsbeispiel ist eine Startimpulsschaltung 28 und eine Stopimpulsschaltung 29 vorgesehen, die das erste Ultraschallecho 10 bzw. das zweite Ultraschallecho 11 verarbeiten. Die Signaltrennung der beiden Echos 10 bzw. 11 erfolgt durch Verzögerungsglieder oder rechnergesteuert in der elektronischen Rechnereinheit 32, die die Vorverstärker 35 ansteuert. Bei einer vorteilhaften Ausgestaltung der Erfindung sendet der Ultraschallsender zwei verschieden polarisierte Ultraschallwellen aus, die von einem zwei Empfangskanäle aufweisenden Ultraschallempfänger aufgefangen werden. Die nur in einem geringen zeitlichen Abstand eintreffenden Ultraschallsignale werden in den zwei Schaltungen 28 und 29 getrennt empfangen und gestatten eine hochpräzise Auflösung der Zeitabstände zwischen zwei von ihren Nulldurchgängen 79.

Es kann auch nur die Startimpulsschaltung 28 vorgesehen sein, die dann sowohl den Startimpuls als auch den Stopimpuls erzeugt.

Es kann auch nur die Stopimpulsschaltung 29 vorgesehen sein, die dann den Stopimpuls für den Zähler 52 erzeugt. Der Startimpuls wird in diesem Fall aus dem Synchronisationssignal 31 des Ultraschallsenders gewonnen. Die Bewertung der einzelnen Impulse als Startimpulse bzw. Stopimpulse, die zeitlich nacheinander an dem gemeinsamen Start/Stop-Eingang des Zählers 52 anliegen, erfolgt über eine weitere Synchronisationsleitung des HF-Senders zum Zähler 52.

## Patentansprüche

1. Vorrichtung zur Messung von Ultraschallaufzeiten in Werkstücken (1) mit einem HF-Pulsgenerator, der Hochfrequenzwellenzüge mit wenigen Schwingungsperioden erzeugt und der mit einem Ultraschallsender (2) verbunden ist, der sich in Koppelkontakt für Ultraschall mit dem zu untersuchenden Werkstück (1) befindet, mit einem Ultraschallempfänger (2), der sich ebenfalls in Koppelkontakt für Ultraschall mit dem zu untersuchenden Werkstück (1) befindet und dessen Ausgangssignal einen Nulldurchgangskomparator (49) und eine Torschaltung (43) beaufschlagt, die einen Synchronisationseingang aufweist, der mit dem HF-Pulsgenerator verbunden ist, wobei die Torschaltung (43) über den ersten Eingang eines UND-Gliedes (48) mit dem Start/Stop-Eingang (51,55) eines Zählers (52) verbunden ist, der zweite Eingang des UND-Gliedes (48) mit dem Ausgangssignal des Nulldurchgangskomparators (49) beaufschlagt ist, und das Zeittor (75) der Torschaltung (43) eine Breite kleiner als die Ultraschallwellenlänge hat und auf vorbestimmte Nulldurchgänge (79,80) positionierbar ist, **dadurch gekennzeichnet**, daß ein Hüllkurvendemodulator (38) zwischen dem Ausgang des Ultraschallempfängers (2) und der Torschaltung (43) vorgesehen ist, dessen Ausgangssignal einen Maximumsdetektor (44) und einen Schwellwertkomparator (40) beaufschlagt, dessen Ausgang mit der Torschaltung (43) verbunden ist, daß der Schwellwertkomparator (40) ein Ausgangssignal (74) bei einem vorbestimmten kleinen Schwellwert (73) zu einem ersten Zeitpunkt (A) zu Beginn der Hüllkurve (72) und der Maximumsdetektor (44) ein Ausgangssignal (77) beim Erreichen des Maximums (76) des Hüllkurvensignals (72) zu einem zweiten Zeitpunkt (B) erzeugt, wobei der erste Zeitpunkt (A) den frühesten Startzeitpunkt des Zeittores (75) und der zweite Zeitpunkt (B) einen Orientierungspunkt in Gestalt des spätesten Startzeitpunktes des Zeittores (75) festlegt, die Breite des Zeittores weniger als oder ungefähr gleich die Hälfte der Ultraschallwellenlänge beträgt, und daß mit einer Verzögerungssteuerschaltung (32) die Verzögerung des Zeittores (75) der Torschaltung (43) für einen zeitlichen Abstand von M Viertel-Wellenlängen des Ultraschalls zu dem Maximum (76) einstellbar ist, wobei M eine ungerade natürliche Zahl ist.

2. Vorrichtung nach Anspruch 1, dadurch gekennzeichnet, daß das Zeittor (75) der Torschaltung (43) mit der Verzögerungssteuerschaltung (32) um eine Viertel-Wellenlänge des Ultraschalls vor dem Maximum (76) positionierbar ist.

3. Vorrichtung nach Anspruch 1 oder Anspruch 2, dadurch gekennzeichnet, daß ein Synchronisationssignal des HF-Senders den Zähler (52) beaufschlagt und daß der Zähler (52) die beiden dem Synchronisationssignal folgenden an seinem Start/Stop-Eingang (51,55) auftretenden Signale als Start- bzw. Stopimpuls verwendet.

4. Vorrichtung nach Anspruch 1 oder Anspruch 2, dadurch gekennzeichnet, daß ein Synchronisationssignal des HF-Senders den Zähler (52) startet, und daß der Zähler (52) das erste dem Synchronisationssignal folgende an seinem Stop-Eingang (55) auftretende Signal als Stopimpuls verwendet.

5. Vorrichtung nach Anspruch 1, dadurch gekennzeichnet, daß eine Stopimpulsschaltung (29) mit einer zweiten Torschaltung (43′), einem zweiten Nulldurchgangskomparator (49′), einem zweiten UND-Glied (48′), einem zweiten Hüllkurvendemodulator (38′), einem zweiten Schwellwertkomparator (40′) und mit einem zweiten Maximumsdetektor (44′) vorgesehen ist, die analog der Startimpulsschaltung (28) verschaltet sind, wobei die Startimpulsschaltung (28) nur mit dem Starteingang (51) und die Stopimpulsschaltung (29) nur mit dem Stopeingang (55) des Zählers (52) verbunden ist.

6. Vorrichtung nach einem der Ansprüche 1 bis 5, dadurch gekennzeichnet, daß der mindestens eine Nulldurchgangskomparator (49,49′) ein ECL-Komparator ist.

7. Vorrichtung nach einem der Ansprüche 1 bis 6, dadurch gekennzeichnet, daß der Zähler (52) ein Digitalzähler mit einer Zeitauflösung von mindestens zwei Nanosekunden ist.

8. Vorrichtung nach einem der Ansprüche 1 bis 7, dadurch gekennzeichnet, daß mindestens ein Vorverstärker (35,35′) vorgesehen ist, der über eine Synchronisationsleitung mit dem HF-Sender verbunden ist und dessen Verstärkung in Abhängigkeit von dem zeitlichen Abstand zu einem Synchronisationsimpuls für Zeittore veränderbar ist, so daß der Ultraschallimpuls (20) unterdrückt wird, und die Verstärkung des ersten Ultraschallechos (10) kleiner als die des zweiten Ultraschallechos (11) ist.

9. Vorrichtung nach einem der Ansprüche 1 bis 8, dadurch gekennzeichnet, daß der Ultraschallsender (2) und der Ultraschallempfänger (2) aus einer einzigen Sender/Empfänger-Einheit bestehen.

## Claims

1. Apparatus for measuring ultrasound propagation times in workpieces (1) having a HF-pulse generator which generates high-frequency wave trains with few oscillation periods and which is connected to an ultrasound transmitter (2) which is in coupling contact for ultrasound with the workpiece (1) to be investigated, an ultrasound receiver (2) which is also in coupling contact for ultrasound with the workpiece (1) to be investigated and whose output signal is fed to a zero-passage comparator (49) and a gate circuit (43) having a synchronisation input which is connected to the HF-pulse generator, wherein the gate circuit (43) is connected by way of the first input of an AND-member (48) to the start/stop input (51, 55) of a counter (52), the second input of the AND-member (48) is fed with the output signal of the zero-passage comparator (49), and the timing gate (75) of the gate circuit (43) is of a width smaller than the ultrasound wavelength and can be positioned at predetermined passages through zero (79, 80), characterised in that an envelope curve demodulator (38) is provided between the output of the ultrasound receiver (2) and the gate circuit (43), the output signal thereof feeding a maximum detector (44) and a threshold value comparator (40) whose output is connected to the gate circuit (43), that the threshold value comparator (40) produces an output signal (74) at a predetermined low threshold value (73) at a first moment in time (A) at the beginning of the envelope curve (72) and the maximum detector (44) produces an output signal (77) when the maximum (76) of the envelope curve signal (72) is reached at a second moment in time (B), wherein the first moment in time (A) fixes the earliest starting time of the timing gate (75) and the second moment in time (B) fixes an orientation point in the form of the latest starting time of the timing gate (75), the width of the timing gate is less than or approximately equal to half the ultrasound wavelength, and that the delay of the timing gate (75) of the gate circuit (43) is adjustable with a delay control circuit (32) for a spacing in respect of time of M quarter-wavelengths of the ultrasound in relation to the maximum (76), wherein M is an odd natural number.

2. Apparatus according to claim 1 characterised in that the timing gate (75) of the gate circuit (43) can be positioned with the delay control circuit (32) by a quarter-wavelength of the ultrasound before the maximum (76).

3. Apparatus according to claim 1 or claim 2 characterised in that a synchronisation signal of the HF-transmitter acts on the counter (52) and that the counter (52) uses as start and stop pulses respectively the two signals which occur following the synchronisation signal at its stop/start input (51, 55).

4. Apparatus according to claim 1 or claim 2 characterised in that a synchronisation signal of the HF-transmitter starts the counter (52) and that the counter (52) uses as a stop pulse the first signal which occurs following the synchronisation signal at its stop input (55).

5. Apparatus according to claim 1 characterised in that there is provided a stop pulse circuit (29) with a second gate circuit (43′), a second zero-passage comparator (49′), a second ANP-member (48′), a second envelope curve demodulator (38′), a second threshold value comparator (40′) and a second maximum detector (44′), which are connected similarly to the start pulse circuit (28), wherein the start pulse circuit (28) is connected only to the start input (51) of the counter (52) and the stop pulse circuit (29) is connected only to the stop input (55) of the counter (52).

6. Apparatus according to one of claims 1 to 5 characterised in that the at least one zero-passage comparator (49, 49′) is an ECL-comparator.

7. Apparatus according to one of claims 1 to 6 characterised in that the counter (52) is a digital counter with a level of time resolution of at least two nanoseconds.

8. Apparatus according to one of claims 1 to 7 characterised in that there is provided at least one preamplifier (35, 35′) which is connected to the HF-transmitter by way of a synchronisation line and whose gain is variable in dependence on the spacing in respect of time relative to a synchronisation pulse for timing gates so that the ultrasound pulse (20) is suppressed and the amplification of the first ultrasound echo (10) is less than that of the second ultrasound echo (11).

9. Apparatus according to one of claims 1 to 8 characterised in that the ultrasound transmitter (2) and the ultrasound receiver (2) comprise a single transmitter/receiver unit.

## Revendications

1. Dispositif pour mesurer des temps de propagation d'ultrasons dans des pièces à usiner (1), comportant un générateur d'impulsions HF, qui produit des trains d'ondes à haute fréquence ayant un petit nombre de périodes d'oscillations et qui est relié à un émetteur d'ultrasons (2), qui est placé en contact, réalisant un couplage pour les ultrasons, avec la pièce à usiner (1) devant être examinée, un récepteur d'ultrasons (2), qui est également placé en contact, réalisant un couplage pour les ultrasons, avec la pièce à usiner (1) devant être examinée, et dont le signal de sortie charge un comparateur (49) de passage par zéro et un circuit de porte (43), qui possède une entrée de synchronisation qui est reliée au générateur d'impulsions HF, le circuit de porte (43) étant relié par l'intermédiaire d'une première entrée d'un circuit ET (48) à l'entrée de démarrage/d'arrêt (51,55) d'un compteur (52) tandis que la seconde entrée du circuit ET (48) est chargée par le signal de sortie du comparateur de passage par zéro (49), et que la fenêtre temporelle (45) du circuit de porte (43) possède une largeur inférieure à la longueur d'onde des ultrasons et peut être positionnée sur des passages par zéro prédéterminés (79,80), caractérisé en ce qu'un démodulateur de courbe enveloppe (38) est prévu entre la sortie du récepteur d'ultrasons (3) et le circuit de porte (43), que son signal de sortie charge un détecteur de maximum (44) et un comparateur à valeur de seuil (41), dont la sortie est reliée au circuit de porte (43), que le comparateur à valeur de seuil (40) produit un signal de sortie (74) pour une faible valeur de seuil prédéterminée (73), à un premier instant (A) au début de la courbe enveloppe (72) et que le détecteur de maximum (44) produit un signal de sortie (77) lorsque le maximum (76) du signal de courbe enveloppe (72) est atteint à un second instant (B), le premier instant (A) déterminant l'instant le plus précoce de démarrage de la fenêtre temporelle (75), tandis que le second instant (B) fixe un point indicatif sous la forme de l'instant de démarrage le plus tardif de la fenêtre temporelle (75), dont la largeur est inférieure ou approximativement égale à la moitié de la longueur d'onde des ultrasons, et que le retard de la fenêtre temporelle (75) du circuit de porte (43) est réglable au moyen d'un circuit de commande de retardement (32), pour l'obtention d'un intervalle de temps égal à M quarts de longueur d'onde des ultrasons par rapport au maximum (76), M étant un nombre naturel impair.

2. Dispositif selon la revendication 1, caractérisé en ce que le créneau temporel (75) du circuit de porte (43), au moyen du circuit de commande de retardement (32), peut être positionné un quart de longueur d'onde des ultrasons en avant du maximum (76).

3. Dispositif selon la revendication 1 ou 2, caractérisé en ce qu'un signal de synchronisation de l'émetteur HF charge le compteur (52) et que le compteur (52) utilise les deux signaux, qui apparaissent à la suite du signal de synchronisation, à son entrée de démarrage/ arrêt (51,55), en tant qu'impulsions de démarrage ou d'arrêt.

4. Dispositif selon la revendication 1 ou 2, caractérisé en ce qu'un signal de synchronisation de l'émetteur HF fait démarrer le compteur (52), et que le compteur (52) utilise le premier signal, qui apparaît à la suite du signal de synchronisation au niveau de son entrée d'arrêt (55), en tant qu'impulsion d'arrêt.

5. Dispositif selon la revendication 1, caractérisé en ce qu'il est prévu un circuit (22) de production d'impulsions d'arrêt comportant un second circuit de porte (43′), un second comparateur de passage par zéro (49′), un second circuit ET (48′), un second démodulateur de courbe enveloppe (38′), un second comparateur à valeur de seuil (40′) et un second détecteur de maximum (44′), qui sont raccordés de façon analogue au circuit (28) de production d'impulsions de démarrage, le circuit (28) de production d'impulsions de démarrage étant relié uniquement à l'entrée de démarrage (51) du compteur (52), et le circuit (29) de production d'impulsions d'arrêt étant relié uniquement à l'entrée d'impulsions d'arrêt (55) du compteur (52).

6. Dispositif selon l'une des revendications 1 à 5, caractérisé par le fait que le comparateur de passage par zéro (49,49′), qui est prévu en au moins un exemplaire, est un comparateur ECL.

7. Dispositif selon l'une des revendications 1 à 6, caractérisé en ce que le compteur (52) est un compteur numérique comportant une résolution temporelle d'au moins deux nanosecondes.

8. Dispositif selon l'une des revendications 1 à 7, caractérisé en ce qu'il est prévu au moins un préamplificateur (35,35′), qui est relié à l'émetteur HF par l'intermédiaire d'une ligne de synchronisation et dont l'amplification peut être modifiée en fonction de l'intervalle de temps par rapport à un signal de synchronisation pour des créneaux temporels, de sorte qu'une impulsion ultrasonore (20) est supprimée, et l'amplification du premier écho ultrasonore (10) est inférieure à celle du second écho ultrasonore (11).

9. Dispositif selon l'une des revendications 1 à 8, caractérisé en ce que l'émetteur d'ultrasons (2) et le récepteur d'ultrasons (2) sont constitués par une seule unité émetteur-récepteur.
